# FASCICULE DE BREVET EUROPEEN

(11) **EP 4 132 817 B1**
(45) Date de publication et mention de la délivrance du brevet: **10.04.2024**
(21) Numéro de dépôt: 21730679.4
(22) Date de dépôt: 10.06.2021
(51) Int. Cl.: B60P 7/15, B60P 3/00, B65G 65/00

(54) **SYSTEME DE SUPPORTS TRACTABLES**
SYSTEM AUS SCHLEPPBAREN TRÄGERN
SYSTEM OF TOWABLE SUPPORTS

(30) Priorité: 19.06.2020 FR 2006414
(43) Date de publication de la demande: 15.02.2023
(73) Titulaire: Effidence, 63540 Romagnat (FR)
(72) Inventeur: LAFOUCRIERE, Pierre Alexandre, 63540 Romagnat (FR); TESSIER, Cédric, 63540 Romagnat (FR)
(74) Mandataire: Gabriel, Franck
(86) Numéro de dépôt international: PCT/IB2021/055088
(87) Numéro de publication internationale: WO 2021/255586

(56) Documents cités:
- EP-B1- 2 102 091
- WO-A2-2019/009729
- US-A1- 2019 129 371

## Description

### DOMAINE TECHNIQUE DE L'INVENTION

La présente invention concerne un système de supports tractables comportant une pluralité de supports, chacun des supports comportant un élément de couplage avec un véhicule tracteur pour permettre à ce dernier de déplacer le support, le système comprenant également au moins un véhicule tracteur motorisé comprenant un ensemble de serrage de l'élément de couplage.

### ETAT DE LA TECHNIQUE ANTERIEURE

Depuis plusieurs années, le nombre de colis et de marchandises transitant dans les entrepôts augmente de façon continue. En même temps, le commerce en ligne apporte des contraintes de livraisons sur de très courtes durées, souvent 24 heures. De nombreuses solutions techniques ont donc été développées afin d'améliorer l'efficacité des entrepôts en général, et des engins de manutention en particulier.

Par exemple, de nombreuses solutions utilisant des robots ou véhicules à guidage automatique (en anglais AGV pour « automatic guided vehicle ») ont été conçues afin de faciliter et d'accélérer les déplacements, chargements et déchargements des marchandises dans les entrepôts.

Une des solutions les plus répandues consiste à utiliser des véhicules à guidage automatique pour déplacer des supports ou étagères sur lesquelles des produits ou paquets ou colis sont disposés.

Certaines solutions requièrent un véhicule adapté pour soulever l'étagère, comme par exemple dans le document WO2019009729, qui décrit un véhicule robotisé et son utilisation pour déplacer un support de marchandises, qui est par exemple chargé de marchandises, ce véhicule pouvant être utilisé dans une position vide et une position chargée. Le véhicule se positionne sous l'étagère à déplacer. Un moyen de levage du véhicule permet de soulever l'étagère pour dégager les roues du sol et ainsi permettre le déplacement sans contrainte. Une fois à destination, l'étagère est reposée sur le sol sur ses roues ou sur ses pieds et le véhicule repart pour une autre tâche.

**On** connaît également le document WO2008085639, qui décrit un appareil pour transporter des articles d'inventaire comprenant un boîtier, un module d'entraînement, un module d'accueil, un arbre élévateur et un module de rotation. Le module d'entraînement est capable de propulser l'appareil dans au moins une première direction. Une tête d'accueil est capable de s'accoupler ou de supporter un support d'inventaire. Le module de rotation est capable d'induire une rotation dans le boîtier par rapport à l'arbre élévateur. L'arbre élévateur se connecte à la tête d'amarrage et est capable de soulever la tête d'amarrage lorsque le boîtier est tourné par rapport à l'arbre élévateur.

**Ces** solutions sont attrayantes car elles permettent de s'adapter aisément à de nombreux types d'étagères ou supports déjà existants. Par contre, le véhicule doit être équipé de dispositifs de levage lourds, et coûteux. Les étapes permettant de soulever les supports ou étagères à transporter présentent des risques de basculement des étagères pouvant causer d'importants dommages.

Pour éviter ces inconvénients, de nombreuses solutions utilisent des étagères ou support à roulettes et des véhicules à guidage automatique tractant les étagères sans devoir les soulever.

**Par** exemple, le document WO2006044108 décrit un système de transport d'inventaire comprenant un support d'inventaire et une unité d'entraînement mobile. Le support d'inventaire comprend un cadre capable de stocker des articles d'inventaire et une plaque d'accueil capable de recevoir une tête d'accueil par le dessous. L'unité d'entraînement mobile comprend une tête d'amarrage capable de se coupler à la plaque d'accueil et un module d'entraînement capable de propulser l'unité d'entraînement mobile. L'unité d'entraînement mobile est en outre capable de déplacer le support d'inventaire lorsque la tête d'accueil est couplée au support d'inventaire. Dans ce type de dispositif, le mode de couplage permettant de relier le véhicule et le support à tracter exige un alignement parfait entre des tiges du véhicules prévues pour insertion dans des cylindres creux disposés sous le support. Un tel alignement pour assurer le couplage est difficile à réaliser, implique des moyens de guidage complexes, et présente un niveau de fiabilité perfectible.

**De** nombreux autres exemples de systèmes de couplage ont été développés pour permettre à un véhicule de tracter une étagère ou support monté sur roues. Les solutions connues présentent en général des lacunes au niveau des capacités de transmission des efforts mécaniques entre le véhicule et le support, rendant les phases de déplacements laborieuses et lentes. Les solutions connues permettant d'assurer un meilleur couplage mécanique sont malheureusement complexes à mettre en oeuvre et impliquent des difficultés lors des phases d'arrimage, rendant les solutions peu efficaces et coûteuses.

Pour pallier les différents inconvénients préalablement évoqués, l'invention prévoit différents moyens techniques.

### EXPOSE DE L'INVENTION

Tout d'abord, un premier objet de l'invention consiste à prévoir un moyen d'arrimage entre un support tel qu'une étagère montée sur roulettes et un robot tracteur permettant de réaliser un arrimage sûr et fiable.

**Un** autre objet de l'invention consiste à prévoir un moyen d'arrimage entre un support tel qu'une étagère montée sur roulettes et un robot tracteur permettant d'empêcher l'arrimage lorsque certaines conditions de sécurité prédéfinies ne sont pas respectées.

**Un** autre objet de l'invention consiste à prévoir un moyen d'arrimage entre un support tel qu'une étagère montée sur roulettes et un robot tracteur permettant de fonctionner en mode automatique de façon fiable, avec un haut niveau de sécurité.

Encore un autre objet de l'invention consiste à prévoir un moyen d'arrimage entre un support tel qu'une étagère montée sur roulettes et un robot tracteur permettant d'effectuer des déplacements à des vitesses élevées en toute sécurité.

Pour ce faire, l'invention prévoit un système de supports tractables comportant:
i) une pluralité de supports mobiles, chacun des supports comportant un élément de couplage avec un véhicule tracteur pour permettre à ce dernier de déplacer le support;
ii) au moins un véhicule tracteur motorisé avec un axe de serrage L-L, comprenant un ensemble de serrage de l'élément de couplage;
dans lequel:
a) l'élément de couplage comprend une barre de traction allongée, dont les faces latérales sont pourvues d'au moins deux encoches opposées ;
b) l'ensemble de serrage du véhicule tracteur comprend au moins deux mâchoires opposées montées coulissantes dans des rails transversaux en regard de l'axe de serrage (L-L) du véhicule tracteur, les formes et dimensions des mâchoires et des encoches permettant un guidage et une insertion des mâchoires dans les encoches du support à déplacer;
c) la course des mâchoires le long des rails est suffisante pour permettre un serrage de la barre de traction lorsque les mâchoires sont insérées dans les encoches.

Une telle architecture permet d'assurer un accrochage sûr et fiable entre un véhicule tracteur et un support compatible. Le double ancrage des mâchoires dans les encoches de la barre de traction procure une liaison mécanique précise assurant une transmission efficace des efforts pour tirer ou pousser ou faire tourner le support. L'espace axial entre les ancrages le long de la barre de traction permet une excellente transmission des efforts de couple pour faire tourner le support. Le véhicule peut s'insérer sous le support par l'avant ou l'arrière, ou par l'un ou l'autre des côtés. La position des mâchoires, peu ou pas accessibles, évite les risques de pincement des doigts des opérateurs.

En variante, une ou plusieurs mâchoires d'un même côté sont fixes. Cette variante permet de simplifier l'agencement mécanique des mâchoires.

Selon un mode de réalisation avantageux, au moins une mâchoire, et de préférence au moins une mâchoire de chaque côté de l'axe de serrage (L-L) comprend un verrou vertical. Dans un exemple de réalisation, le verrou vertical comprend au moins une plaque de recouvrement disposée sur une ou plusieurs mâchoires et se prolonge sur la barre de traction lorsque les mâchoires sont insérées dans les encoches.

Cet agencement permet de maîtriser et sécuriser les efforts verticaux par exemple en virage ou freinage qui tendraient à faire basculer le support. Il est ainsi possible d'effectuer des déplacements à des vitesses relativement élevées, par exemple égale ou supérieure à 1 m/s, et même jusqu'à 2 m/s. Même en cas de freinage brutal, le support est maintenu et ne bascule pas. Le niveau de sécurisation de l'arrimage est ainsi particulièrement élevé.

De manière avantageuse, au moins un des supports est monté sur des pieds roulants ou glissants sur le sol.

Egalement de manière avantageuse, les mâchoires et les encoches correspondantes ont des profils convergents ou divergents en se dirigeant vers l'axe de serrage (L'-L').

Ce type de profil permet de guider les mâchoires et de corriger les trajectoires d'insertion des mâchoires dans les cas où le positionnement relatif du véhicule et du support ne procure pas une parfaite correspondance des mâchoires et des encoches.

De manière avantageuse, un capteur d'écartement est couplé aux mâchoires et conçu pour fournir un signal d'arrimage adéquat lorsque les mâchoires se rapprochent l'une de l'autre au-delà d'un seuil donné correspondant à un arrimage adéquat.

**Cette** configuration permet de vérifier que les mâchoires sont bien insérées dans les encoches avant d'autoriser le déplacement du système. Un tel capteur permet également de détecter une situation où les mâchoires se rapprochent suffisamment pour indiquer que la barre de traction n'est pas présente.

Selon un mode de réalisation avantageux, un capteur d'effort est couplé aux mâchoires et agencé pour fournir un signal d'arrimage adéquat lorsque les mâchoires exercent une force d'appui supérieure à un seuil donné correspondant à un arrimage adéquat.

Cette configuration permet de s'assurer que la barre de traction est bien arrimée par les mâchoires avant d'autoriser le déplacement du système.

De manière avantageuse, un détecteur de position des pieds de support est prévu sur le véhicule tracteur et conçu pour fournir un signal de support compatible lorsque l'agencement des pieds détectés correspond à une configuration de compatibilité.

Cette configuration permet de s'assurer que le véhicule tracteur ne puisse pas déplacer un support non compatible avec le système, dans des conditions de sécurité qui pourraient ne pas être satisfaisantes. La validation du support peut aussi être assurée par lecture par le véhicule tracteur d'un identifiant du support que le véhicule doit reconnaître et valider avant d'autoriser les déplacements.

En variante, le déplacement du véhicule tracteur est verrouillé lorsqu'une situation de non conformité est détectée.

Le niveau sécurité du système atteint ainsi des standards particulièrement élevés.

Egalement de manière avantageuse, au moins une des mâchoires, ainsi que l'encoche correspondante, ont un profil différent des autres.

Selon encore un mode de réalisation avantageux, un décalage axial est prévu entre les mâchoires et entre les encoches.

Ces modes de réalisation avec des emboîtements très spécifiques permettent de s'assurer que l'arrimage s'effectue uniquement entre les équipements compatibles et convenablement positionnés l'un par rapport à l'autre.

L'invention prévoit également un support pour système de supports tractables tel que préalablement décrit.

L'invention prévoit également un véhicule tracteur pour système de supports tractables tel que préalablement décrit.

### DESCRIPTION DES FIGURES

Tous les détails de réalisation sont donnés dans la description qui suit, complétée par les figures 1 à 12, présentées uniquement à des fins d'exemples non limitatifs, et dans lesquelles:
- la figure 1 est une représentation schématique d'une vue de face d'un exemple de système de supports tractables montré avec un véhicule tracteur prêt pour arrimage avec un support compatible;
- la figure 2 est une représentation schématique en vue de dessus du système de la figure 1 avant positionnement du véhicule tracteur sous le support;
- la figure 3 est une représentation schématique partielle en vue de dessus du système de la figure 1 après arrimage;
- la figure 4 est une représentation schématique en vue de face du système de la figure 1 lorsque le véhicule tracteur est arrimé au support;
- la figure 5 est une représentation schématique partielle en vue de dessus d'un premier exemple d'incompatibilité entre un support et un véhicule tracteur;
- la figure 6 est une représentation schématique partielle en vue de dessus d'un second exemple d'incompatibilité entre un support et un véhicule tracteur;
- la figure 7 est une représentation schématique partielle en vue de dessus d'un premier exemple de positionnement non conforme empêchant d'effecteur un arrimage entre un support et un véhicule tracteur;
- la figure 8 est une représentation schématique partielle en vue de dessus d'un second exemple de positionnement non conforme empêchant d'effecteur un arrimage entre un support et un véhicule tracteur;
- la figure 9 montre le système de la figure 2 vu en perspective;
- la figure 10 montre le système de la figure 4 vu en perspective ;
- la figure 11 est une représentation schématique illustrant des exemples de mâchoires et encoches avec des profils convergents vers l'axe de serrage ;
- la figure 12 est une représentation schématique illustrant des exemples de mâchoires et encoches avec des profils divergents vers l'axe de serrage.

### DESCRIPTION DETAILLEE DE L'INVENTION

### SUPPORT A TRACTER

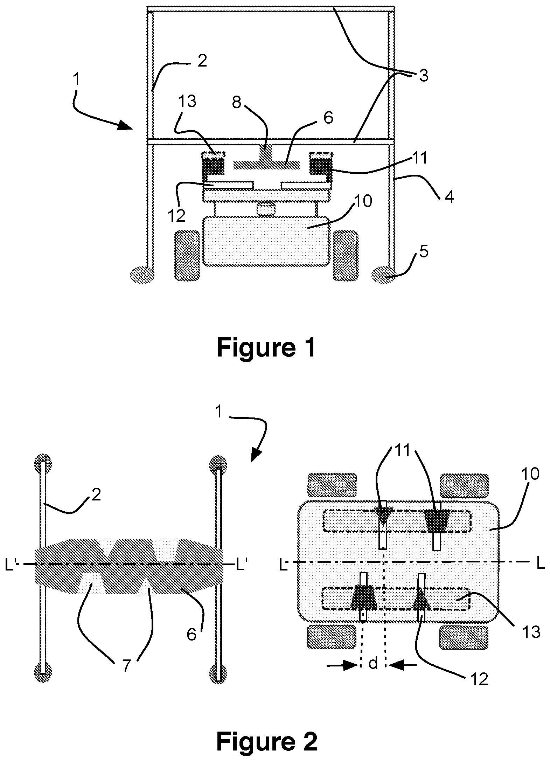

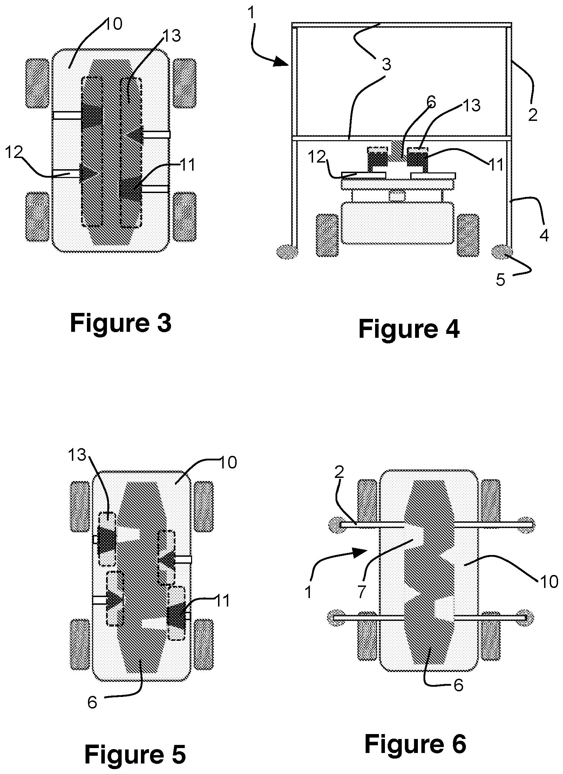

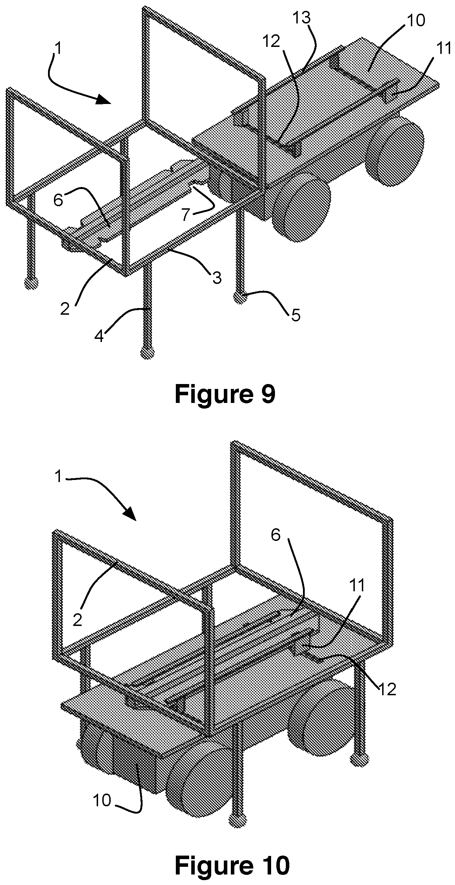

Les figures 1 à 4 ainsi que les figures 9 et 10 illustrent un exemple de système 1 de support tractable, illustré avant arrimage aux figures 1, 2 et 9, et après arrimage aux figures 3, 4 et 10. Le système 1 de supports tractables comprend au moins un support 2, par exemple une étagère permettant de porter des colis, objets, marchandises en tous genres, sur un ou plusieurs plans 3 de stockage. Dans l'exemple illustré le support comporte quatre pieds 4 espacés et pourvus de roues 5 ou roulettes ou galets. Les pieds 4 sont suffisamment espacés entre eux pour permettre le passage entre eux d'un véhicule 10 tracteur, de préférence un véhicule à guidage automatique. En variante, le support est porté par le haut à l'aide d'un pont roulant.

La liaison mécanique entre le support 2 et le véhicule 10 tracteur est assurée par une barre 6 de traction allongée, comportant un axe de serrage L'-L', fixée au plan 3 inférieur du support. Par axe de serrage, on entend un axe ou droite virtuel, de préférence médian, contre lequel un effort de serrage est exercé de part et d'autre de l'axe. Dans les exemples illustrés, la barre 6 de traction est fixée au support 2 par une interface 8 de barre de traction comme par exemple une ou plusieurs tiges ou blocs. La barre 6 de traction est ainsi configurée pour un positionnement à proximité immédiate du dessus du véhicule 10 tracteur. Tel que montré aux figures 2 et 3, la barre 6 de traction comporte une pluralité d'encoches 7 agencées sur les faces d'appui ou de faces de serrage.

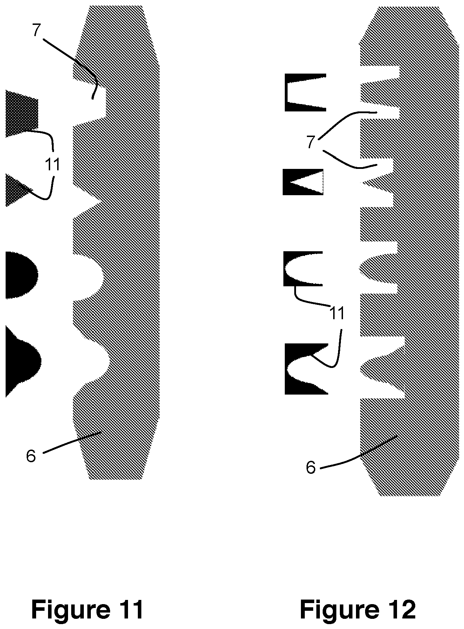

Tel qu'illustré dans les représentation schématiques partielles des figures 11 et 12, les mâchoires 11 et les encoches 7 correspondantes sont appariés avec des profils convergents ou divergents en se dirigeant vers le centre de la barre de traction 6. Divers types de profils convergents ou divergents peuvent être utilisés, comme par exemple trapézoïdal, triangulaire, arrondi, etc. Les profils appariés convergents ou divergents permettent, lorsque les mâchoires se rapprochent, de guider et recentrer le support en regard du véhicule de façon à ce que les deux éléments s'alignent progressivement l'un avec l'autre pour un emboîtement exact et précis des mâchoires dans les encoches.

Selon les modes de réalisation, l'agencement peut être symétrique ou non. L'exemple illustré est asymétrique. L'asymétrie concerne la forme des encoches 7 et leurs positions axiales. On retrouve ainsi, de part et d'autres de l'axe de serrage L'-L' une encoche de forme trapézoïdale et une encoche de forme triangulaire, orientées vers l'axe de serrage L'-L'. Dans l'exemple illustré, les encoches 7 de chacun des côtés sont décalées axialement entre elles, et les profils inversés, de sorte que l'avant de la barre 6 comporte d'un côté une encoche trapézoïdale et une encoche triangulaire. Pour permettre une bonne transmission des efforts de couple, on prévoit avantageusement sur au moins une des faces ou sur chaque face de serrage deux encoches distales, de préférence agencées dans les zones d'extrémité des faces de serrage. Le véhicule 10 tracteur comporte un agencement de mâchoires correspondant. Tel qu'illustré, la barre de traction est de préférence pourvue de bords biseautés afin de faciliter l'approche et le centrage du véhicule de traction sous le support.

### VEHICULE TRACTEUR

Le véhicule 10 tracteur est motorisé, comporte de préférence des moyens de guidage automatique, et comporte un axe de serrage L-L prévu pour correspondre à l'axe de serrage L'-L' de la barre 6 de traction après accrochage des deux éléments du système. Dans l'exemple illustré, le véhicule 10 tracteur comporte une pluralité de mâchoires 11, de part et d'autre de l'axe de serrage L-L, dont les formes et dimensions sont adaptées aux encoches 7 de la barre 6 de traction, d'une part pour permettre d'effectuer un bon alignement du support avec le véhicule tel que préalablement décrit, et d'autre part pour permettre une insertion ajustée des mâchoires 11 dans les encoches 7 de même profil. Dans l'exemple illustré, les mâchoires 11 sont agencées par paires, en opposition, avec un décalage « d » axial (montré à la figure 2) optionnel. Comme pour les encoches opposées d'une barre 6 de traction, les mâchoires 11 opposées n'ont pas les mêmes profils. Les mâchoires 11 sont montées coulissantes dans des rails 12 agencés transversalement à l'axe de serrage L-L. Les rails 12 sont configurés pour permettre, lorsque les mâchoires sont en mode écarté, au véhicule 10 tracteur de s'insérer sous le support 2 à tracter, en laissant passer la barre 6 de traction entre les mâchoires 11. La forme avantageusement biseautée des bords de la barre de traction facilite le repositionnement du support lors de l'avancement du véhicule. Les rails 12 sont également configurés pour permettre, lorsque les mâchoires sont en position d'accrochage, d'exercer une force de serrage contre les parois des encoches, de façon à procurer un arrimage solide et fiable, et un haut niveau de sécurité. Dans un exemple de réalisation, une force de serrage égale ou supérieure à 2200 N est avantageusement prévue pour permettre d'effectuer le recentrage et le serrage d'un support de 350 kg.

### ARRIMAGE ENTRE LE VEHICULE TRACTEUR ET UN SUPPORT

Lorsque le véhicule 10 tracteur est convenablement aligné sous le support 2 et que les mâchoires 11 sont alignées avec les encoches 7 correspondantes, l'arrimage peut être effectué. Les mâchoires 11 sont alors refermées l'une vers l'autre jusqu'à insertion dans les encoches 7 tel qu'illustré aux figures 3 et 4, ce qui permet le recentrage latéral, longitudinal et angulaire du support en regard du véhicule. Des moteurs électriques ou hydrauliques permettent d'actionner les mâchoires, soit individuellement ou de façon groupée, par exemple pour une paire de mâchoires montées en face à face. Chaque de mâchoire est de préférence actionnée par une vis trapézoïdale, permettant de maintenir l'arrimage sans devoir maintenir les actionneurs ou les freins actifs de façon continue. Des verrous de mâchoires peuvent être prévus pour bloquer les mâchoires en position d'arrimage et pour éviter que l'effort de serrage diminue involontairement.

### VERROU VERTICAL

Dans les exemples de réalisation illustrés, le véhicule 10 tracteur comporte au moins un verrou vertical 13 agencé sur au moins une mâchoire, et de préférence au moins sur une mâchoire de chaque côté de l'axe de serrage L-L. Dans un exemple de réalisation, le verrou vertical comprend au moins une plaque de recouvrement disposée sur une ou plusieurs mâchoires et se prolongeant sur la barre de traction lorsque les mâchoires sont insérées dans les encoches. Selon les variantes, on prévoit au moins une plaque 13 de chaque côté de l'axe de serrage L-L. L'agencement des plaques 13 de recouvrement est prévu de sorte que lorsque les mâchoires 11 sont insérées dans les encoches 7 de la barre 6 de traction, les plaques 13 recouvrent au moins partiellement la barre 6 de traction. Cette caractéristique technique permet de former un appui au-dessus de la barre 6 de traction, empêchant celle-ci de se soulever ou de s'incliner latéralement, contribuant à la stabilité et la sécurité du support 2 tracté. Cet agencement permet au système de supports tractables de se déplacer à haute vitesse en toute sécurité. Si le véhicule 10 tracteur freine brutalement, les plaques 13 empêchent le support de basculer. Dans une variante non illustrée, des plaques similaires aux plaques 13 sont prévues sous les mâchoires, procurant ainsi un maintien sous la barre 6 de traction, et améliorant encore la stabilité et la sécurité du système de supports tractables. Encore en variante, le verrou vertical est intégré aux profils des mâchoires 11 et des encoches 7, qui comportent, à l'image des profils précédemment décrits en relation avec les figures 11 et 12, des profils appariés convergents ou divergents orientés dans un plan vertical. Cette variante permet de limiter ou d'empêcher un déplacement vertical de la barre de traction. Cette variante peut s'utiliser en remplacement ou en complément de la plaque de recouvrement. Encore en variante, le verrou vertical comprend une fente ou un renfoncement prévu dans le profil vertical de l'encoche, et dans lequel une portion proéminente de la mâchoire peut s'insérer, procurant ainsi un maintien dans le sens vertical. Plusieurs types de profils, telle une sphère, un cône, ou autre, procurant un maintien dans le sens vertical, peuvent être utilisés.

### SYSTEME ADAPTABLE AUX SUPPORTS EXISTANTS

Le système de supports tractables tel que décrit permet d'assurer le rétro-équipement de supports déjà existant. A cet effet, l'utilisateur se procure un ensemble pour rétro-équipement (en anglais « retrofit ») comportant une pluralité de barres 6 de traction prêtes pour montage sous les supports 2 déjà existants. Un ou plusieurs véhicules 10 tracteurs peuvent compléter ce rétro-équipement.

### DETECTION DE NON CONFORMITES

Les figures 5 à 8 illustrent divers exemples de détection de non conformité. Afin d'assurer un haut niveau de sécurité, le système 1 de supports tractables permet de détecter plusieurs cas ou situations de non conformité dans lesquels il est souhaitable de ne pas déplacer le support. A cet effet, le véhicule 10 tracteur comporte avantageusement un ou plusieurs détecteurs permettant de détecter et de localiser les éléments clés pour assurer un arrimage conforme aux critères de sécurité et d'accrochage mécanique préétablis. Par exemple, un ou plusieurs détecteurs de position détectent la position des mâchoires 11 le long des rails 12 afin de vérifier si chacune des mâchoires est suffisamment avancée pour être bien emboîtée dans l'encoche correspondante. Un capteur d'effort est avantageusement prévu pour vérifier le niveau de serrage des mâchoires contre la barre de traction. Un ou plusieurs capteurs peuvent vérifier les pieds du support afin de valider ou non leur écartement, leur type, etc. En cas de non conformité, le système de conduite du véhicule 10 tracteur doit évaluer si la non conformité peut ou non être corrigée, par exemple en déplaçant le véhicule. Si oui (non conformité corrigeable), un nouvel essai est effectué. Si non (non conformité non corrigeable), le véhicule se retire et/ou un message d'erreur est transmis à l'opérateur.

La figure 5 montre un exemple de non conformité non corrigeable où les profils et alignements des éléments à emboîter, à savoir les mâchoires 11 et les encoches 7, ne correspondent pas. Le système de conduite du véhicule tracteur détecte cette situation et empêche de tracter le support 2 tant que les mâchoires 11 ne peuvent pas être mises en place de façon sécurisée.

La figure 6 montre un autre exemple de non conformité non corrigeable où une ou plusieurs dimensions en relation avec le support 2, par exemple la largeur ou la longueur entre les pieds 4, permet de détecter que le support 2 n'est pas conforme ou compatible avec le système 1 de supports tractables.

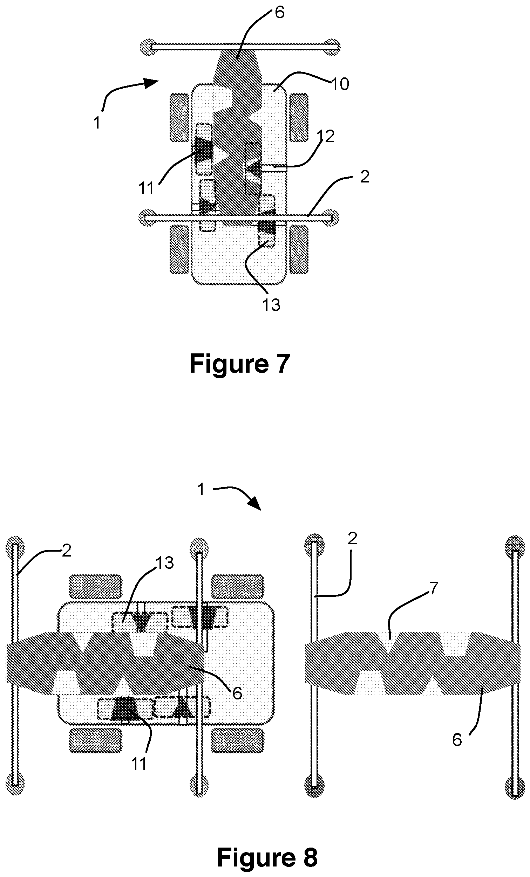

La figure 7 illustre un exemple de non conformité corrigeable. Le véhicule 10 tracteur n'est pas bien positionné. Si les mâchoires 11 sont rétractées, une détection de non insertion d'une des mâchoires et d'insertion partielle d'autres mâchoires permet de constater que la position d'arrimage n'est pas atteinte. Le véhicule est alors déplacé jusqu'à ce que l'arrimage puisse être effectué de façon convenable.

La figure 8 illustre une série de cas qui peuvent survenir lorsque le véhicule progresse avec plusieurs supports alignés les uns après les autres. Dans cet exemple, le véhicule se déplace vers la droite. Dans la situation initiale, le véhicule est trop avancé pour s'arrimer au support 2 de gauche. Les mâchoires 11 ne peuvent pas s'insérer convenablement dans les encoches 7. Cette non conformité peut être identifiée par des capteurs détectant la position des pieds, dans ce cas non conforme pour procéder à l'arrimage, par exemple par détection de :
a) la position des pieds du chariot est détectée au-delà de la valeur admissible de recentrage ;
b) la distance entre les pieds avant et les pieds arrière du support est non conforme ;
c) les quatre pieds détectés ne forment pas le rectangle attendu ;
d) les mâchoires se resserrent en absence de barre de traction : le support est supposé accroché, mais dès que le véhicule se déplace, une détection des pieds immobiles permet de détecter le non arrimage.

Dans un autre exemple de non conformité, l'utilisation d'un capteur de détection du niveau de serrage permet de déceler la situation suivante: les mâchoires se resserrent sur une barre de traction mais pas au niveau des encoches avec impossibilité de serrer à fond, et détection de non arrimage.

### Numéros de référence employés sur les figures

- 1: Système de supports tractables
- 2: Support (étagère) monté sur roues
- 3: Plan pour chargement
- 4: Pieds
- 5: Roues
- 6: Barre de traction allongée
- 7: Encoches
- 8: Interface de barre de traction
- 9: -----
- 10: Véhicule tracteur, de préférence véhicule à guidage automatique
- 11: Mâchoires transversales
- 12: Rail transversal
- 13: Verrou vertical
- 14: ----
- 15: -----
- L-L: Axe de serrage du véhicule tracteur
- L'-L': Axe de serrage de la barre de traction
- d: Décalage axial des mâchoires

## Revendications

1. Système (1) de supports tractables comportant:
i) une pluralité de supports (2) mobiles, chacun des supports (2) comportant un élément de couplage avec un véhicule (10) tracteur pour permettre à ce dernier de déplacer le support (2);
ii) au moins un véhicule (10) tracteur motorisé d'axe de serrage L-L, comprenant un ensemble de serrage de l'élément de couplage;
**caractérisé en ce que**:
a) l'élément de couplage comprend une barre (6) de traction allongée, dont les faces latérales sont pourvues d'au moins deux encoches (7) opposées;
b) **en ce que** l'ensemble de serrage du véhicule (10) tracteur comprend au moins deux mâchoires (11) opposées montées coulissantes dans des rails (12) transversaux en regard de l'axe de serrage (L-L) du véhicule (10) tracteur, les formes et dimensions des mâchoires (11) et des encoches permettant un guidage et une insertion des mâchoires dans les encoches (7) du support (2) à déplacer;
c) et **en ce que** la course des mâchoires (11) le long des rails (12) est suffisante pour permettre un serrage de la barre (6) de traction lorsque les mâchoires (11) sont insérées dans les encoches (7).

2. Système (1) de supports tractables selon la revendication 1, dans lequel au moins une mâchoire, et de préférence au moins une mâchoire de chaque côté de l'axe de serrage (L-L) comprend un verrou vertical.

3. Système (1) de supports tractables selon la revendication 1, dans lequel un capteur d'écartement est couplé aux mâchoires (11) et conçu pour fournir un signal d'arrimage adéquat lorsque les mâchoires se rapprochent l'une de l'autre au-delà d'un seuil donné correspondant à un arrimage adéquat.

4. Système (1) de supports tractables selon la revendication 3, dans lequel un capteur d'effort est couplé aux mâchoires (11) et agencé pour fournir un signal d'arrimage adéquat lorsque les mâchoires exercent une force d'appui supérieure à un seuil donné correspondant à un arrimage adéquat.

5. Système (1) de supports tractables selon la revendication 1, dans lequel au moins un des supports est monté sur des pieds (4) roulants ou glissants sur le sol.

6. Système (1) de supports tractables selon l'une quelconque des revendications 3 à 5, dans lequel le déplacement du véhicule tracteur est verrouillé lorsqu'une situation de non conformité est détectée.

7. Système (1) de supports tractables selon l'une quelconque des revendications 1 à 6, dans lequel au moins une des mâchoires (11), ainsi que l'encoche (7) correspondante, ont un profil différent des autres.

8. Système (1) de supports tractables selon l'une quelconque des revendications 1 à 7, dans lequel les mâchoires (11) et les encoches (7) correspondantes ont des profils convergents ou divergents en se dirigeant vers l'axe de serrage (L'-L').

## Patentansprüche

1. System (1) aus schleppbaren Trägern, umfassend:
i) eine erste Vielzahl beweglicher Träger (2), wobei jeder der Träger (2) ein Element zum Koppeln mit einem Schleppfahrzeug (10) umfasst, um es diesem Letzteren zu erlauben, den Träger (2) zu verlagern;
ii) mindestens ein motorisiertes Schleppfahrzeug (10) mit Spannachse L-L, das eine Spannbaugruppe des Kopplungselements umfasst;
**dadurch gekennzeichnet, dass**:
a) das Kopplungselement eine längliche Zugstange (6) umfasst, deren Seitenflächen mit mindestens zwei entgegengesetzten Kerben (7) versehen sind;
b) die Spannbaugruppe des Schleppfahrzeugs (10) mindestens zwei entgegengesetzte Backen (11) umfasst, die in Schienen (12) gleitend montiert sind, die in Bezug auf die Spannachse (L-L) des Schleppfahrzeugs (10) quer sind, wobei die Formen und Maße der Backen (11) und der Kerben eine Führung und eine Einfügung der Backen in die Kerben (7) des zu verlagernden Trägers (2) erlauben;
c) und dass der Hub der Backen (11) entlang der Schienen (12) ausreicht, um ein Spannen der Zugstange (6) zu erlauben, wenn die Backen (11) in die Kerben (7) eingefügt sind.

2. System (1) aus schleppbaren Trägern nach Anspruch 1, wobei mindestens eine Backe und bevorzugt mindestens eine Backe auf jeder Seite der Spannachse (L-L) einen vertikalen Riegel umfasst.

3. System (1) aus schleppbaren Trägern nach Anspruch 1, wobei ein Beabstandungssensor mit den Backen (11) gekoppelt und dazu konzipiert ist, ein angemessenes Befestigungssignal zu liefern, wenn sich die Backen einander über einen gegebenen Schwellenwert, der einem angemessenen Befestigen entspricht, nähern.

4. System (1) aus schleppbaren Trägern nach Anspruch 3, wobei ein Kraftsensor mit den Backen (11) gekoppelt und dazu eingerichtet ist, ein angemessenes Befestigungssignal zu liefern, wenn die Backen eine Auflagekraft größer als ein gegebener Schwellenwert, der einem angemessenen Befestigen entspricht, ausüben.

5. System (1) aus schleppbaren Trägern nach Anspruch 1, wobei mindestens einer der Träger auf Füßen (4) montiert ist, die auf dem Boden rollen oder gleiten.

6. System (1) aus schleppbaren Trägern nach einem der Ansprüche 3 bis 5, wobei die Verlagerung des Schleppfahrzeugs verriegelt wird, wenn eine nicht konforme Situation erfasst wird.

7. System (1) aus schleppbaren Trägern nach einem der Ansprüche 1 bis 6, wobei mindestens eine der Backen (11) sowie die entsprechende Kerbe (7) ein von den anderen unterschiedliches Profil aufweist.

8. System (1) aus schleppbaren Trägern nach einem der Ansprüche 1 bis 7, wobei die Backen (11) und die entsprechenden Kerben (7) konvergierende oder divergierende Profile in Richtung der Spannachse (L'-L') aufweisen.

## Claims

1. System (1) of towable supports comprising:
i) a plurality of mobile supports (2), each support (2) comprising an element for coupling with a towing vehicle (10) allowing it to move the support (2);
ii) at least one motorized towing vehicle (10) with a clamping axis L-L comprising a coupling element clamping assembly;
**characterized in that**:
a) the coupling element comprises an elongated towing bar (6) whose side faces are provided with at least two opposing notches (7);
b) the clamping assembly of the towing vehicle (10) comprises at least two opposing jaws (11) mounted to slide on rails (12) transverse to the clamping axis (L-L) of the towing vehicle (10), the shapes and dimensions of the jaws (11) and notches enabling guidance and insertion of the jaws in the notches (7) of the support (2) to be moved;
c) there is sufficient travel of the jaws (11) along the rails (12) to enable the towing bar (6) to be clamped when the jaws (11) are inserted in the notches (7).

2. System (1) of towable supports according to claim 1, wherein at least one jaw, and preferably at least one jaw on each side of the clamping axis (L-L) comprises a vertical lock.

3. System (1) of towable supports according to claim 1, wherein a spacing sensor is coupled to the jaws (11) and designed to supply a successful docking signal when the jaws approach one to the other beyond a set threshold corresponding to successful docking.

4. System (1) of towable supports according to claim 3, wherein a force sensor is coupled to the jaws (11) and arranged to supply a successful docking signal when the jaws exert a pressure greater than a set threshold corresponding to successful docking.

5. System (1) of towable supports according to claim 1, wherein at least one of the supports is mounted on feet (4) rolling or sliding on the ground.

6. System (1) of towable supports according to any one of claims 3 to 5, wherein the displacement of the towing vehicle is locked when a non-conforming situation is detected.

7. System (1) of towing supports according to any one of claims 1 to 6, wherein at least one of the jaws (11), and the corresponding notch (7), have a profile differing from the others.

8. System (1) of towing supports according to any one of claims 1 to 7, wherein the jaws (11) and the corresponding notches (7) have convergent or divergent profiles moving toward the clamping axis (L'-L').
